# EUROPEAN PATENT APPLICATION

(11) **EP 2 465 729 A1**
(43) Date of publication of application: **20.06.2012**
(21) Application number: 10807820.5
(22) Date of filing: 29.07.2010
(51) Int. Cl.: B60R 1/12, B60R 1/00, B60R 1/04

(54) **IMPROVEMENT FOR INTERNAL REAR VIEW MIRROR SYSTEM**

(30) Priority: 14.08.2009 BR PI0903001
(71) Applicant: Metagal Industria e Comercio Ltda, Estado de Minas Gerais CEP 37540-000 (BR)
(72) Inventor: MIYABUKURO, Pedro Takashi, Estado de São Paulo (BR)
(74) Representative: Murgatroyd, Susan Elizabeth
(86) International application number: PCT/BR2010/000260
(87) International publication number: WO 2011/017789

(57) **Abstract**

The present abstract relates to a patent of invention for an interior rearview mirror system pertaining to the field of motor vehicle accessories essentially comprising: an interior rearview mirror system (1) associated with an electronic system for capturing and transmitting information of interest for the driver for operating the vehicle, essentially comprising: an interior rearview mirror (1) having a prismatic mirror (2) provided with an integrated display (20), whose glass portion is intended to show characters that may be seen by an observer positioned in front of it; sensors (21) connected to the display (2) and mounted on the exterior rearview mirrors (30) and/or other suitable parts and/or mechanisms of the vehicle (200); and an associated electronic circuitry (40) that connects and supplies the display and sensors of the system.

## Description

The present specification relates to a patent of invention for an interior rearview mirror system pertaining to the field of motor vehicle accessories, and which has been improved to incorporate other functions through a simple, effective and low cost construction.

Motor vehicle interior rearview mirrors are already known as being essentially comprised by: a casing having an opening turned to the rearward region of the vehicle; a prismatic mirror plate assembly housed in the casing; and a bracket protruding from the rear face of the casing and mounted on the upper central portion of the vehicle windshield or ceiling region adjacent the windshield.

Interior rearview mirrors are particularly designed to provide the driver, together with the exterior rearview mirrors, with a view of the rearward region of the vehicle during reversing and other maneuvers. More recently, interior rearview mirrors have shown a trend to incorporate other functions, such as courtesy lighting and others.

In view of such trend, the object of the present patent of invention is to provide an improved interior rearview mirror incorporating other functions in addition to the usual one.

Another object is to provide an improved interior rearview mirror incorporating a simple construction and manufacturing device to implement the new functions.

Another object is to provide an improved interior rearview mirror which incorporates new functions and is also low cost.

In view of the aforementioned aspects and objects and in order to achieve their accomplishment, an improved interior rearview mirror is disclosed herein, which incorporates the functions of a display for displaying information of interest for the driver operating the vehicle, such as: environment-related parameters, such as: temperature, relative air humidity, air quality and others; functions relating to the use of the vehicle, such as: taximeter, GPS, time (clock) and others; driver-related functions, such as: breath alcohol analyzer (alcohol testing device), sleepiness sensor and others, and for such purpose, said interior rearview mirror system is essentially comprised by: an interior rearview mirror system associated with an electronic system for capturing and transmitting information , essentially comprising: sensors mounted to the exterior rearview mirrors and other suitable mechanisms of the vehicle; and interior rearview mirror provided with a prismatic mirror featuring an integrated display connected to the sensors; and associated electronic circuitry that connects the display and sensors.

Such construction is suitable to enable the interior rearview mirror to incorporate other functions, according to the main object of the invention.

By contemplating the sensors and prismatic mirror with an integrated display, the present interior rearview mirror system combines, on the other hand, a relatively simple and low cost constriction and manufacturing solution, according to other objects of the invention.

Additionally, the present interior rearview mirror system enables displaying the driver information through ergonomically suitable means, as the driver has access to the information from a widely known and fully proven equipment that is the interior rearview mirror, in addition to its conventional function, that is to say, displaying the vehicle's rearward.

The attached drawings refer to the improvement in interior rearview mirror system, object of the present patent, in which:
figs. 1, 2 and 3 show the interior rearview mirror provided with a prismatic mirror featuring an integrated display; figure one further includes a general scheme of the system and indication of its operation;
fig. 4 shows a motor vehicle scheme incorporating the interior rearview mirror system of the present invention;
fig. 5 shows a block diaogram of the circuitry that connects the display to the sensors; and
fig. 6 shows a flowchart of the functional characteristics of the interior rearview mirror system of the invention.

According to the drawings, the interior rearview mirror system object of this patent of invention is intended to perform its usual function of displaying the driver the region 100 behind the vehicle 200 (fig. (4)) and, additionally, incorporate new functions designed to display information of interest for driving the vehicle or others, such as: environment-related parameters, such as: temperature, relative air humidity, air quality and others; functions relating to the use of the vehicle, such as: taximeter, GPS, time (clock) and others; driver-related functions, such as: breath alcohol analyzer (alcohol testing device), sleepiness sensor and others.

For such purpose, said interior rearview mirror is essentially comprised by: an interior rearview mirror 1 associated with an electronic system for capturing and transmitting information, essentially comprising: an interior rearview mirror 1 having a prismatic mirror 2 provided with an integrated display 20, whose glass portion is intended to show characters that may be seen by an observer positioned in front of it; sensors 21 connected to the display 20 and mounted on the exterior rearview mirrors 30 and/or other suitable parts and/or mechanisms of the vehicle 200; and an associated electronic circuitry 40 that connects and supplies the display and sensors of the system.

In details, the interior rearview mirror 1 is comprised by a casing 3 having an opening turned to the region behind 100 the vehicle 200; a prismatic mirror assembly 2 housed in the casing; and a bracket (4) extending from the rear part of the casing 3 and mounted on the upper central portion of the vehicle windshield or ceiling adjacent the windshield. The prismatic mirror assembly 2 is comprised by a prismatic glass coated with a silver or aluminum metallized layer whose reflectance is higher than 85%.

The electronic information capturing and transmitting system associated with the interior rearview mirror 1 is essentially comprised by: a display 20 integrated to the rear face of the display area 2' of the prismatic mirror 2 having a selective metallization, such that said display area 2' is translucent when the display 20 is off and its light (image) transmission is increased when the display 20 is on.

The display 20 may be a LCD (Liquid Crystal Display). Optionally, the display 20 may be a LED bus 20'.

Sensors 21 are specific for the functions to which they are intended: sensors responsive to the environment temperature, relative air humidity, air quality; sensors for the function of taximeter, GPS: breath analyzer (alcohol testing device) and others. Sensors designed to be responsive to the environmental conditions or stimuli outside the vehicle are mounted on the exterior rearview mirrors 30 and those responsive to stimuli inside the vehicle, such as taximeter, are mounted in the usual suitable parts of the vehicle or others.

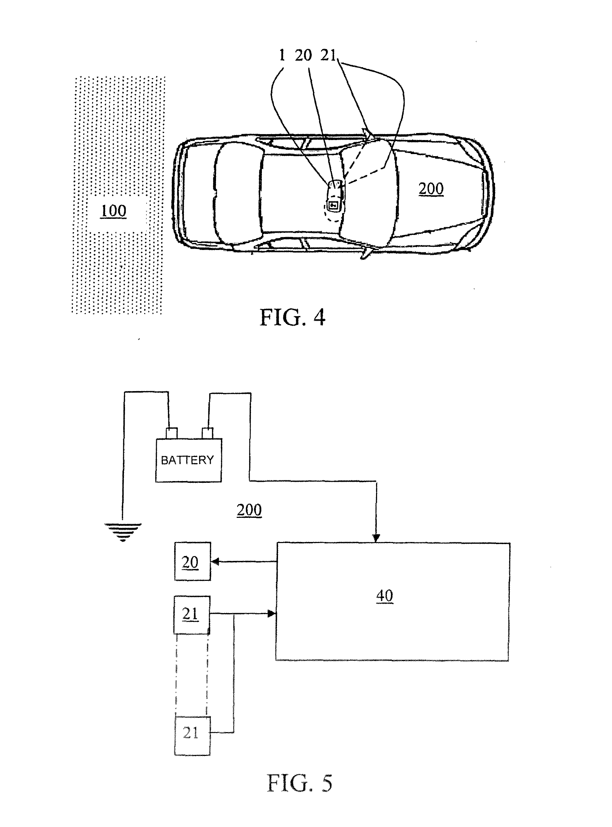

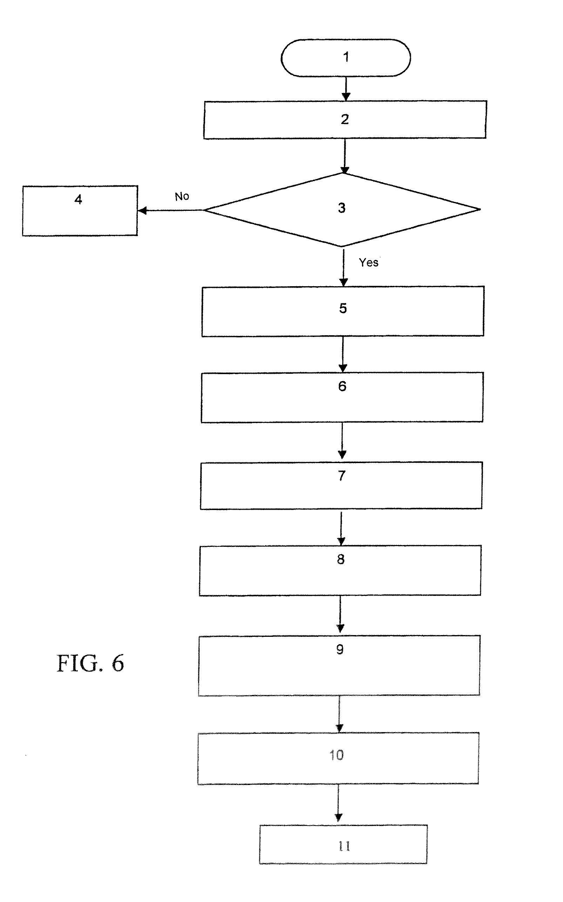

The circuitry (40) (fig. 5) that connects the sensors 21 to the display 20 and supplies power is substantially comprised by a circuit which receives and processes the signals from the sensors and transmits them to the display 20 by means known in the art; and power supply circuit connected to the vehicle battery arranged such that the electronic information capturing and transmitting system works according to the flowchart shown in figure 6.

The flowchart of functional characteristics of the electronic information capturing and transmitting system of the interior rearview mirror of the invention (fig. 6) shows:
Start - Block 1 comprises;
Sensor system activated - Block 2, comprises;
Display on? - Block 3. It does not comprise standby system - Block (4). Yes, it comprises the operating system - Block 5;
Operating system - Block 5 comprises;
Actuation of the sensor located in the exterior rearview mirror 30 of the vehicle - Block 6 comprises;
Capturing room temperature and relative air humidity variants - Block 7 comprises;
Light (information) passing from the display 20 through the mirror 2 - Block 8;
Displaying time, temperature and relative air humidity variants in the mirror 2 to an observer in front of the mirror - Block 9;
Displaying the area 100 behind the vehicle to an observer through more than 85% reflectance provided by the mirror 2 - Block 10; and
End - Block 11.

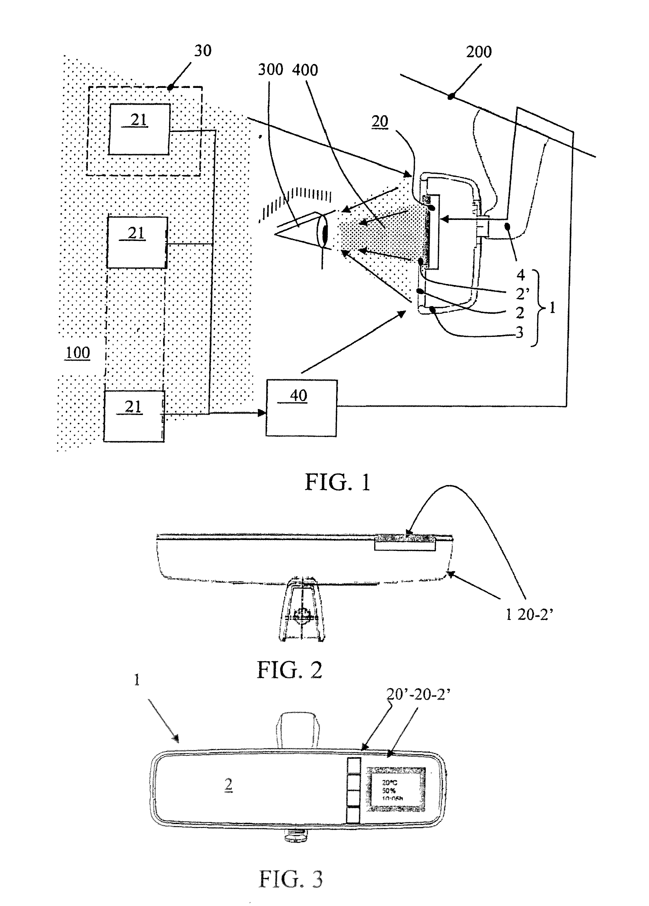

Thus, the prismatic mirror 2 of the interior rearview mirror 1 displays to an observer 300 (fig. 1) images from the region 100 behind the vehicle 200 captured through the usual optical features of the mirror, and in the display area 2' of the mirror, characters 400 corresponding to the information of interest for driving the vehicle and others captured and transmitted by the electronic information capturing and transmitting system are displayed, and said system is comprised by the display 20 and sensors 21.

According to the basic construction described above, the interior rearview mirror system object of the present invention may be subject to changes in materials, dimensions, constructive details and/or functional and/or ornamental configuration without departing from the scope of the protection claimed.

## Claims

1. "IMPROVEMENT IN INTERIOR REARVIEW MIRROR SYSTEM", **characterized essentially by comprising:** an interior rearview mirror system (1) associated with an electronic system for capturing and transmitting information to the driver's interest when driving the vehicle, essentially comprising: an interior rearview mirror (1) having a prismatic mirror (2) provided with an integrated display (20) intended to display through the piece of glass characters that may be seen by an observer positioned in front of it; sensors (21) connected to the display (2) and mounted on the exterior rearview mirrors (30) and/or other suitable parts and/or mechanisms of the vehicle (200); and an associated electronic circuitry (40) that connects and supplies power to the display and sensors of the system.

2. "IMPROVEMENT IN INTERIOR REARVIEW MIRROR SYSTEM", according to claim 1, **characterized in that** the interior rearview mirror (1) comprises: a prismatic mirror assembly (2) consisting of a prismatic silver or aluminum metallized piece of glass whose reflection is above 85%; a casing (3) having an opening turned to the region (100) rearward the vehicle (200) and housing the prismatic mirror assembly (2); and a bracket (4) extending from the casing (3) and mounted on the upper central portion of the vehicle windshield or ceiling next to the windshield.

3. "IMPROVEMENT IN INTERIOR REARVIEW MIRROR SYSTEM", according to claim 1 or 2, **characterized in that** the electronic information capturing and transmitting system associated with the interior rearview mirror (1) comprises: a display (2) integrated to the rear face of the display area (2)' of the prismatic mirror (2) having a selective metallization, such that said display area (2)' is translucent when the display (2) is off and its light (image) transmission is increased when the display (20) is on; said display (20) may be LCD (Liquid Crystal Display) or, optionally, a LED bus (20').

4. "IMPROVEMENT IN INTERIOR REARVIEW MIRROR SYSTEM", according to claim 1 or 3, **characterized in that** the sensors (21) are specific for the functions to which they are intended: room temperature, relative air humidity, air quality sensors; taximeter function sensors, GPS; alcohol sensor (breath alcohol analyzer) and others; said sensors intended to be actuated by the environmental conditions or stimuli outside the vehicle are mounted on the exterior rearview mirrors (30) and those actuated by stimuli inside the vehicle are mounted in the usual suitable parts of the vehicle or others.

5. "IMPROVEMENT IN INTERIOR REARVIEW MIRROR SYSTEM", according to clam 1 or 3 or 4, **characterized in that** the circuitry (40) that connects the sensors (21) to the display (20) and supplies power is substantially comprised by a circuit that receives and processes signals from the sensors and transmits them to the display (20); and a power supply circuit connected to the vehicle battery, arranged such that the electronic information capturing and transmitting system displays information characters in the display area (2)' of the prismatic mirror (2) of the interior rearview mirror (1) and said prismatic mirror (2) simultaneously captures and displays, through its own optical resources, images of the region (100) behind the vehicle (200).
